Europäisches Patentamt

European Patent Office

Office européen des brevets

(11) Veröffentlichungsnummer: **0 263 451**
**A1**

(12) # EUROPÄISCHE PATENTANMELDUNG

(21) Anmeldenummer: **87114451.5**

(51) Int. Cl.⁴: **C03C 27/04**

(22) Anmeldetag: **03.10.87**

(30) Priorität: 06.10.86 DE 3633985

(43) Veröffentlichungstag der Anmeldung:
**13.04.88 Patentblatt 88/15**

(84) Benannte Vertragsstaaten:
**DE FR GB IT NL**

(71) Anmelder: **Standard Elektrik Lorenz Aktiengesellschaft**
**Lorenzstrasse 10**
**D-7000 Stuttgart 40(DE)**

(72) Erfinder: **Neusch, Michael**
**Kirchstrasse 12/1**
**D-7300 Esslingen(DE)**
Erfinder: **Bock, Josef**
**Baumreute 24/1**
**D-7300 Esslingen(DE)**
Erfinder: **Waldraff, Siegmar**
**Mühlhaldenweg 47**
**D-7310 Plochingen(DE)**

(74) Vertreter: **Pohl, Heribert, Dipl.-Ing et al**
**Standard Elektrik Lorenz AG Patent- und**
**Lizenzwesen Postfach 30 09 29**
**D-7000 Stuttgart 30(DE)**

(54) **Vakuumdichtes Verbinden von Metall- mit Glasflächen.**

(57) Bei dem Verfahren zum Verbinden einer Metallfläche mit einer Glasfläche mit einem Glaslot wird vor dem üblichen Fritten auf der Metallfläche eine geringe Menge Glaslot eingebrannt oder die Metallfläche aufgerauht.

FIG.2

## Vakuumdichtes Verbinden von Metall-mit Glasflächen

Die Erfindung bezieht sich auf ein Verfahren zum vakuumdichten Verbinden von Metall-mit Glasflächen mit Hilfe eines Glaslots.

Aus Römpps Chemie-Lexikon, Band 2, 8. Auflage, 1981, Stichwort "Glaslote" ist bekannt, daß Glasteile mit Metallen durch Glaslot miteinander verbunden werden können. Weiterhin ist bekannt, daß sich oxidierte Metallteile mechanisch fester und dichter mit Glas verbinden als blanke Metallteile (W. Espe, Werkstoffe der Hochvakuumtechnik II, Seite 391.

Der Erfindung liegt die Aufgabe zugrunde, ein einfaches Verfahren zum sicheren und beständigen vakuumdichten Verbinden von Metall-mit Glasflächen mit Hilfe eines Glaslotes anzugeben.

Die Lösung dieser Aufgabe erfolgt mit den im Anspruch 1 oder mit den im Anspruch 2 angegebenen Schritten.

Vorteilhafte Ausgestaltungen der Erfindung sind in den Unteransprüchen 3 bis 8 enthalten.

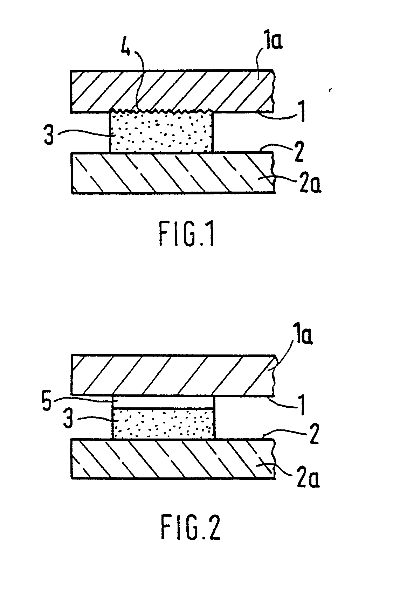

Die Erfindung wird nun anhand von Ausführungsbeispielen erläutert, wobei in den Figuren 1 und 2 schematisch je eine Verbindung zwischen einer Metall-und einer Glasfläche dargestellt ist.

In Fig. 1 ist im Schnitt die vakuumdichte Verbindung zwischen der Metallfläche 1 und der Glasfläche 2 mit Hilfe des Glaslots 3 dargestellt. Die Metallfläche 1 kann dabei die metallische Wanne 1a und die Glasfläche 2 die Frontplatte 2a einer flachen Bildwiedergabevorrichtung sein (nicht dargestellt). Es ist selbstverständlich, daß bei dieser Verbindung alle Materialien in ihrem Ausdehnungskoeffizient aneinander angepaßt sind. Die Metallfläche 1 weist im Bereich des Glaslots 3 die Aufrauhung 4 auf, deren Tiefe etwa 10 bis 50 um beträgt und in Fig. 1 nicht maßstabsgerecht dargestellt ist.

Das Verbinden der beiden Flächen miteinander geht folgendermaßen vor sich:

Die Metallfläche 1 wird mit Hilfe eines fettlösenden Mittels, beispielsweise Trichloräthylen, gereinigt und entfettet. Im Bereich der späteren Verbindung erfolgt dann eine Aufrauhung, beispielsweise durch ein Sandstrahlverfahren. Eine vorher vorhandene Oxidschicht ist hierbei vollständig zu entfernen. Die Rauhtiefe soll etwa 10 bis 50 um betragen. Anschließend wird die Metallfläche in Luft bei etwa 500°C 10 Minuten lang oxidiert. Als nächstes wird das Glaslot 3 auf die Metallfläche im Bereich der Aufrauhung 4 aufgetragen und die Glasfläche 2 aufgelegt und in bekannter Weise beide Flächen zusammen gefrittet. Es kann das Glaslot 3 auch auf die Glasfläche 2 aufgetragen werden und dann die Metallfläche 1 aufgelegt werden. Das Auftragen des Glaslotes 3 erfolgt durch eines der bekannten Verfahren.

In Fig. 2 sind für gleiche Teile gleiche Bezugszeichen verwendet worden. Die Metallfläche 1 weist im Bereich des Glaslotes 3 eine Schicht 5 des eingebrannten Glaslots auf. Die Dicke der Schicht beträgt etwa 0,2 mm; sie ist in Fig. 2 nicht maßstabsgerecht gezeichnet. Die Metallfläche 1 ist in diesem Ausführungsbeispiel nicht mit einer Aufrauhung versehen.

Das Verbinden der beiden Flächen geht folgendermaßen vor sich:

Die Metallfläche 1 wird mit Hilfe eines fettlösenden Mittels, z.B. Trichloräthylen, gereinigt und entfettet und danach in Luft bei etwa 500°C 10 Minuten lang oxidiert. Als nächstes wird das Glaslot auf die Metallfläche im Bereich der späteren Verbindung in einer solchen Menge aufgetragen, daß später die etwa 0,2 mm dicke Schicht 5 vorhanden ist. Das Glaslot wird bei etwa 600°C 30 Minuten lang eingebrannt. Es ist darauf zu achten, daß eine gleichmäßige, geschlossene Schicht 5 entsteht. Dabei erfolgt der Anstieg und der Abfall der Temperatur mit 10°C pro Minute. Dann wird das Glaslot 3 aufgetragen, die Glasfläche 2 aufgelegt und in bekannter Weise beide Flächen zusammengefrittet.

Es wurde eine vakuumdichte Verbindung mit einer erhöhten Haftfestigkeit zwischen Teilen aus folgenden Materialien hergestellt:

Metallische Wanne 1a : Pernifer 48; $\alpha$ = 90 $\bullet$ $10^{-7}\bullet$ $K^{-1}$
Werkstoffnr. 1.3922
kaltgewalzt 12,5 mm dick

Glaslot 3 = Glaslot der Schicht 5 : Fritte Nr. 8596 der Fa. Schott

Frontplatte 2a : Floatglas; $\alpha$ = 90 $\bullet$ $10^{-7}\bullet$ $K^{-1}$
Desag

## Ansprüche

1. Verfahren zum vakuumdichten Verbinden von Metall-mit Glasflächen mit Hilfe eines Glaslots, **gekennzeichnet durch** folgende Schritte:

a) Entfetten der Metallfläche

b) Oxidieren der Metallfläche

c) Aufbringen einer definierten Menge des Glaslots auf die Metallfläche

d) Einbrennen dieses Glaslots

e) Aufbringen von weiterem Glaslot auf die behandelte Metallfläche oder die Glasfläche

f) Auflegen der Glas-bzw. Metallfläche

g) Fritten der Metall-mit der Glasfläche.

2. Verfahren zum vakuumdichten Verbinden von Metall-mit Glasflächen mit Hilfe eines Glaslots, **gekennzeichnet durch** folgende Schritte:

a) Entfetten der Metallfläche

b) Aufrauhen der Metallfläche

c) Oxidieren der Metallfläche

d) Aufbringen des Glaslots auf die behandelte Metallfläche oder die Glasfläche

e) Auflegen der Glas-bzw. Metallfläche

f) Fritten der Metall-mit der Glasfläche.

3. Verfahren nach Anspruch 1, dadurch gekennzeichnet, daß das Einbrennen bei 600°C für 30 Minuten erfolgt und der Temperaturkoeffizient beim Erwärmen und Abkühlen 10°C pro Minute beträgt.

4. Verfahren nach Anspruch 3, dadurch gekennzeichnet, daß die Dicke des eingebrannten Glaslots auf der Metallfläche etwa 0,2 mm beträgt.

5. Verfahren nach Anspruch 2, dadurch gekennzeichnet, daß zum Aufrauhen ein Sandstrahl verwendet wird.

6. Verfahren nach Anspruch 2, dadurch gekennzeichnet, daß die Rauhtiefe 10 bis 50 um beträgt.

7. Verfahren nach Anspruch 1 oder 2, dadurch gekennzeichnet, daß die Oxidation bei etwa 500°C für 10 Minuten an Luft erfolgt.

8. Verfahren nach Anspruch 1 oder 2, dadurch gekennzeichnet, daß zum Entfetten Trichloräthylen verwendet wird.

FIG.1

FIG.2

M. Neusch 1-1-1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,Y | GB-A- 696 987 (G.R. SHEPHERD) <br> * Figuren; Seite 2, Zeilen 16-117 * <br> --- | 1-8 | C 03 C 27/04 |
| Y | GB-A- 558 202 (ANGLO-IRANIAN OIL CO.) <br> * Beispiel 1; Ansprüche 10-12 * <br> --- | 1,2,7 | |
| Y | DE-B-1 055 770 (PPG) <br> * Beispiel 1 * <br> --- | 1,2,8 | |
| X | FR-A-2 408 026 (LIBBEY-OWENS-FORD) <br> * Seite 5, Zeilen 10-22; Seite 7, Zeilen 5-36 * <br> ----- | 1,2 | |

RECHERCHIERTE SACHGEBIETE (Int. Cl.4)

C 03 C 27/00

Der vorliegende Recherchenbericht wurde für alle Patentansprüche erstellt

| Recherchenort | Abschlußdatum der Recherche | Prüfer |
|---|---|---|
| DEN HAAG | 08-01-1988 | BOUTRUCHE J.P.E. |